# FASCICULE DE BREVET EUROPEEN

(11) **EP 2 916 990 B1**
(45) Date de publication et mention de la délivrance du brevet: **30.11.2016**
(21) Numéro de dépôt: 13791851.2
(22) Date de dépôt: 23.10.2013
(51) Int. Cl.: B23K 26/04, B23K 26/14, B23K 26/38

(54) **BUSE LASER À ÉLÉMENT MOBILE EXTERNE**
LASERDÜSE MIT EXTERNEM MOBILEN ELEMENT
LASER NOZZLE HAVING AN EXTERNAL MOBILE ELEMENT

(30) Priorité: 09.11.2012 FR 1260656
(43) Date de publication de la demande: 16.09.2015
(73) Titulaire: L'Air Liquide Société Anonyme pour l'Etude et l'Exploitation des Procédés Georges Claude, 75007 Paris (FR)
(72) Inventeur: JOUANNEAU, Thomas, F-38000 Grenoble (FR); LEFEBVRE, Philippe, F-78250 Meulan (FR)
(74) Mandataire: Pittis, Olivier
(86) Numéro de dépôt international: PCT/FR2013/052533
(87) Numéro de publication internationale: WO 2014/072609

(56) Documents cités:
- DE-C1- 19 853 735
- JP-A- H07 251 287
- JP-A- 2003 260 582
- US-A- 3 383 491
- US-A- 5 786 561

## Description

L'invention concerne une buse laser utilisable en coupage par faisceau laser avec élément mobile conformément au préambule de la revendication 1 (voir, par exemple, US3,383,491), la buse laser comprenant une jupe permettant de concentrer le gaz de coupe dans la saignée de coupe et offrant, en outre une mise en oeuvre au plan industriel améliorée.

Le coupage par faisceau laser nécessite l'utilisation d'une buse généralement en cuivre ayant pour effet de canaliser le gaz et laisser passer le faisceau laser. Le gaz et le faisceau se propage jusqu'à la pièce à découper à travers un passage axial traversant le corps de la buse. Les buses ont typiquement des diamètres de leur orifice de sortie compris entre 0.5 et 3 mm pour une distance de travail comprise entre 0,6 et 2 mm.

Afin de permettre la découpe, il est nécessaire d'utiliser des pressions élevées, en général de plusieurs bar, dans la tête de focalisation afin de permettre au gaz de rentrer dans la saignée pour chasser le métal en fusion.

Or, une grande partie du gaz utilisée, typiquement entre 50 et 90%, n'a aucune action sur le processus de découpe, c'est-à-dire sur l'expulsion du métal en fusion, car elle part sur les cotés de la saignée de coupe.

Ces pertes de gaz sont en fait dues à l'énorme différence entre la section de passage de l'orifice de buse et la taille de la tâche focale. Ainsi, à titre indicatif, la section de passage d'une buse avec orifice de sortie de diamètre égal à 1.5 mm est 25 fois plus importante que la section de la tache focale créée par le faisceau laser traversant cette buse.

Or, si une proportion insuffisante de gaz est mise en oeuvre, on assiste alors à l'apparition de défauts de coupe, en particulier des bavures adhérentes et/ou des traces d'oxydation.

Tenter d'y remédier en réduisant le diamètre de l'orifice de la buse n'est pas idéal car on prend alors le risque de voir le faisceau laser venir frapper l'intérieur de la buse et la détériorer, ce qui par ailleurs détériore également la qualité de coupe et/ou les performances.

Il existe par ailleurs un certain nombre de documents proposant diverses solutions pour tenter de favoriser l'entrée du gaz dans la saignée, par exemple EP-A-1669159, JP-A-62006790, JP-A-61037393, JP-A-63108992, JP-A-63040695, US-A-4,031,351, US 3,383,491, DE 198 53 765 C1 et JP-A-2003-260582.

Or, aucune de ces solutions n'est vraiment idéale car souvent d'architecture complexe à mettre en oeuvre, d'encombrement excessivement supérieur à celui d'une buse classique, et/ou présentant une efficacité limitée.

Notamment, le document US 3,383,491 divulgue une buse de coupage laser comprenant un élément mobile dont l'extrémité est plaquée par un ressort contre la surface de la pièce à découper pour favoriser l'injection du gaz de coupe dans la saignée. Le document DE 198 53 765 C1 décrit également un ressort ayant un effet similaire.

Cette solution pose un certain nombre de problèmes. D'une part, la force exercée par le ressort en direction de la tôle conduit l'élément mobile à exercer un effort important sur la tôle à couper. Il s'ensuit un risque de déformation, de rayure, voire d'entraînement de la tôle, laquelle est en général simplement posée sur la table de la machine de découpe. D'autre part, le dispositif est de mise en oeuvre complexe et d'un encombrement largement supérieur à celui d'une buse laser classique. Ceci pose problème dans le cadre de découpes de pièces en imbrication, c'est-à-dire de pièces très rapprochées sur une même tôle. Or, ce type de découpe est largement employé dans l'industrie de la découpe laser du fait de l'économie de matière qu'elle procure.

Une solution alternative a été proposée dans la demande de brevet français n° 1154224, déposée le 16 mai 2011 et non publiée à la date de dépôt de la présente demande. Elle consiste à agencer un élément mobile dans le corps d'une buse laser. Cet élément mobile est apte à se déplacer axialement dans ledit corps sous l'effet d'une pression gazeuse, et ce en direction de la surface de la tôle à découper. Il s'ensuit un rapprochement de l'élément mobile de la surface supérieure de la tôle à couper jusqu'à se trouver en contact avec celle-ci. L'élément mobile forme ainsi une jupe par laquelle le gaz de coupe est canalisé et concentré au niveau de la saignée, ce qui force le gaz à entrer dans ladite saignée et améliore son efficacité.

Toutefois, cette solution n'est pas idéale du fait que l'élément mobile doit être agencé au sein même du corps de la buse laser, plus précisément dans le passage axial du corps de la buse.

En effet, il est nécessaire de proposer une solution améliorant l'efficacité du gaz et qui puisse être, en outre, aisément mise en oeuvre par une modification simple des buses laser existantes et déjà largement commercialisées, sans modification de leur géométrie interne.

Ces buses laser classiques ont des géométries diverses, chaque modèle étant dédié à un type de procédé de découpe, un type de faisceau laser, un type de tête de focalisation... Dans le cadre d'une mise en oeuvre au plan industriel, il est donc primordial de proposer une solution qui soit compatible avec la plupart, voir la totalité, de ces buses.

Or, il existe dans l'industrie de la découpe laser un grand nombre de buses dont le corps n'offre pas un volume de matière suffisant pour y aménager un logement axial pour un élément mobile interne selon la demande FR n° 1154224.

En outre, certaines applications de découpe nécessite l'utilisation de buses dites « double-flux » comprenant, en plus d'un passage de gaz axial, au moins un passage de gaz latéral traversant le corps de buse et aménagé à proximité dudit passage axial. La présence de ce ou ces passages supplémentaires rend difficile l'usinage d'un logement dans le corps de la buse, c'est-à-dire un élargissement du passage axial initial, pour y accueillir un élément mobile interne.

Par ailleurs, la solution consistant à agencer un élément mobile dans le passage axial d'une buse classique, sans élargissement préalable dudit passage, est à proscrire puisqu'elle engendre une réduction de l'espace disponible pour le passage du faisceau laser focalisé. Il s'ensuit un risque d'échauffement, voire une détérioration, des parois internes de l'élément mobile et/ou du corps de buse, ce qui détériore également la qualité et/ou les performances de coupe, ainsi que la productivité du procédé.

Le problème qui se pose est dès lors de pallier tout ou partie des inconvénients susmentionnés en proposant une buse laser permettant notamment d'améliorer l'efficacité du gaz utilisé en coupage laser, tout en offrant une mise en oeuvre au plan industriel et une durée de vie grandement améliorée par rapport aux solutions existantes, et qui soit en outre compatible avec la majeure partie, voire la totalité des buses laser classiques existantes.

La solution de la présente invention est alors une buse laser conformément au préambule de la revendication 1, comprenant:
- un corps de buse comprenant un premier passage axial,
- une coiffe externe comprenant un logement axial, le corps de buse étant agencé au moins partiellement dans ledit logement axial, et
- un élément mobile comprenant un deuxième passage axial et une partie avant formant jupe, ledit élément mobile étant agencé entre la coiffe externe et le corps de buse et étant mobile en translation dans le logement axial de la coiffe externe.

Selon le cas, la buse de l'invention peut comprendre l'une ou plusieurs des caractéristiques techniques suivantes :
- le logement axial de la coiffe externe comprend un premier orifice de sortie situé au niveau d'une face avant de ladite coiffe externe, l'élément mobile étant apte à et conçu pour se déplacer en translation dans le logement axial, en direction du premier orifice de sortie, jusqu'à ce que la partie avant formant jupe de l'élément mobile fasse saillie à l'extérieur du logement axial au travers dudit premier orifice de sortie du logement axial.
- le corps de buse, la coiffe externe et l'élément mobile sont des pièces de révolution agencées coaxialement les unes aux autres, le corps de buse comprenant une partie avant agencée au moins partiellement dans le deuxième passage axial de l'élément mobile.
- le premier passage axial du corps de buse comprend un deuxième orifice de sortie situé au niveau de la partie avant dudit corps de buse et le deuxième passage axial de l'élément mobile comprend un troisième orifice de sortie situé au niveau de la partie avant formant jupe de l'élément mobile, ledit troisième orifice de sortie débouchant en aval dudit deuxième orifice de sortie lorsque la partie avant fait saillie à l'extérieur du logement axial.
- le corps de buse comprend au moins un conduit d'amenée de gaz aménagé au sein dudit corps de buse et mettant en communication fluidique le premier passage axial du corps de buse et le logement axial de la coiffe externe.
- le logement axial comprend un épaulement interne, de préférence aménagé au niveau du fond dudit logement axial, et la paroi périphérique externe de l'élément mobile comprend une butée agencée en regard dudit épaulement, l'élément élastique étant agencé entre la butée et l'épaulement interne.
- la buse comprend en outre un élément tubulaire formant manchon autour de tout ou partie de la partie avant du corps de buse, l'élément tubulaire étant formé d'un matériau électriquement isolant.
- l'élément mobile est apte à se déplacer entre plusieurs positions comprenant :
   - une position de repos dans laquelle la partie avant de l'élément mobile est totalement ou quasi-totalement rentrée dans le logement axial, et
   - une position de travail dans laquelle la jupe de la partie avant de l'élément mobile fait totalement ou quasi-totalement saillie à l'extérieur du logement axial, au travers du troisième orifice de sortie.

L'invention porte également sur une tête de focalisation laser comprenant au moins une optique de focalisation, par exemple une ou plusieurs lentilles ou miroirs, notamment une lentille de focalisation et une lentille de collimation, caractérisée en ce qu'elle comporte en outre une buse laser selon l'invention.

Par ailleurs, l'invention concerne aussi une installation laser comprenant un générateur laser, une tête de focalisation laser et un dispositif de convoyage de faisceau laser relié audit générateur laser et à ladite tête de focalisation laser, caractérisée en ce que la tête de focalisation laser est selon l'invention.

De préférence, le générateur ou source laser est de type CO₂, YAG, à fibres ou à disques, de préférence à fibres ou à disques, notamment une source laser à fibres d'ytterbium.

Selon un autre aspect, l'invention a également trait à un procédé de coupage par faisceau laser, dans lequel on met en oeuvre une buse selon l'invention, une tête de focalisation laser selon l'invention ou une installation selon l'invention.

L'invention va maintenant être mieux comprise grâce à la description suivante faite en références aux Figures annexées parmi lesquelles :
- la Figure 1A schématise une tête de focalisation d'une installation de coupage laser classique,
- la Figure 1B schématise la taille du spot laser par rapport à la taille de l'orifice de buse,
- la Figure 2 schématise une vue en coupe d'une buse selon un mode de réalisation de l'invention,
- les Figures 3A et 3B schématisent des vues en coupe de certains éléments constitutifs d'une buse selon un mode de réalisation de l'invention,
- la Figure 4 schématise une vue en coupe d'une buse selon un autre mode de réalisation de l'invention, l'élément mobile occupant une position différente de celle représentée en Figure 2, et
- les Figures 5A et 5B schématisent une buse selon l'invention en fonctionnement, l'élément mobile occupant deux positions différentes.

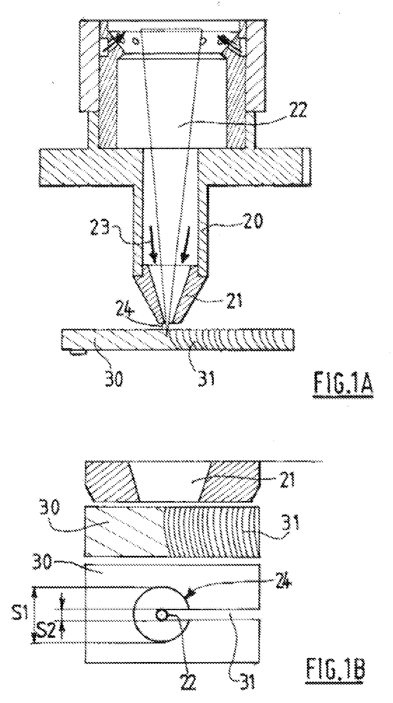

La Figure 1A représente la tête de focalisation 20 d'une installation de coupage laser classique, auquel est fixée une buse laser 21 classique qui est traversée par un faisceau laser focalisé et par du gaz d'assistance (flèche 23) servant à expulser le métal fondu par le faisceau hors de la saignée 31 de coupe formée par le faisceau 22 dans la pièce métallique à couper 30, par exemple une tôle en acier ou en acier inoxydable.

Le gaz d'assistance peut être un gaz actif, tel de l'oxygène, de l'air, du CO₂, de l'hydrogène, ou un gaz inerte, tel l'argon, l'azote, l'hélium, ou un mélange de plusieurs ces gaz actifs et/ou inertes. La composition du gaz est choisie notamment en fonction de la nature de la pièce à couper.

Le faisceau qui vient impacter la pièce va y fondre le métal qui sera expulsé en-dessous de la pièce par la pression du gaz d'assistance.

La Figure 1B permet de bien visualiser la section S1 de passage de l'orifice 24 de la buse 21 par rapport à la taille S2 de la tâche focale du faisceau 22. Comme on le voit, la section S1 est très supérieure à la taille S2 de la tâche focale du faisceau 22, ce qui engendre, avec les buses classiques, une consommation élevée de gaz d'assistance dont seulement une faible proportion va servir à expulser le métal fondu hors de la saignée de coupe 31.

Pour éviter d'avoir à agencer un élément mobile interne à l'intérieur du corps de la buse laser classique de la Figure 1A, plus précisément dans le passage axial de ladite buse, la présente invention propose une buse laser à élément mobile externe.

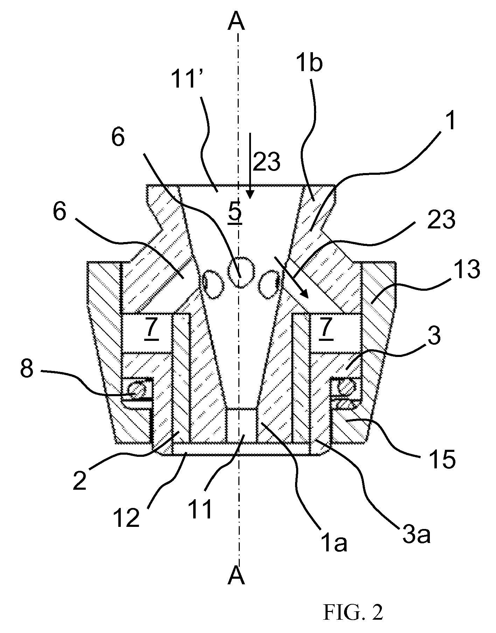

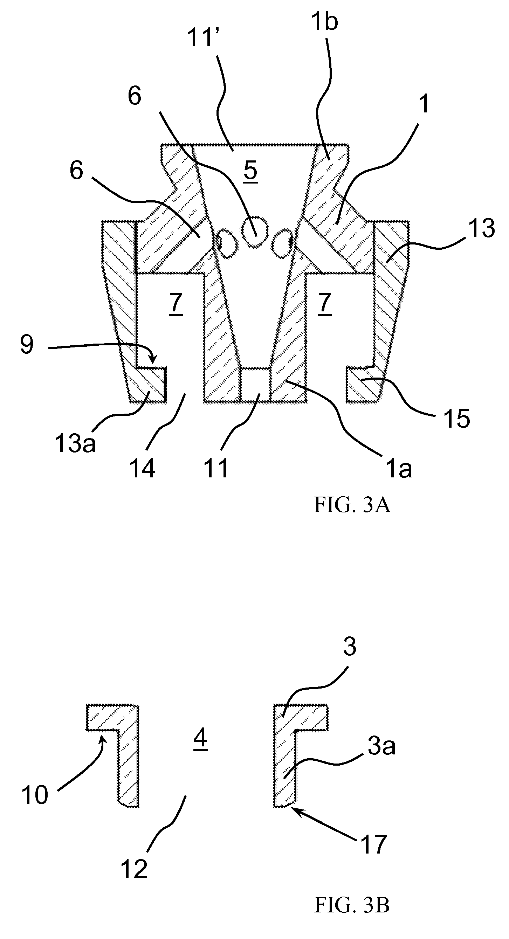

En fait, la buse laser de l'invention, visible sur la Figure 2, comprend un corps 1 de buse et une coiffe externe 13, visibles sur la Figure 3A, coopérant avec un élément mobile 3 agencé de façon mobile autour d'au moins une partie du corps 1 de la buse. Un élément mobile 3 conforme à l'invention est schématisé en Figure 3B.

Plus précisément, le corps 1 de buse, de préférence formé d'un matériau conducteur, par exemple du cuivre ou du laiton, est destiné à venir se fixer sur la tête de focalisation laser 20 de l'installation laser.

Avantageusement, le corps 1 de buse est une pièce de révolution traversée de part en part par un premier passage axial 5 d'axe de symétrie AA qui s'étend depuis la partie arrière 1b du corps 1 jusqu'à la partie avant 1a dudit corps 1.

Dans le cadre de l'invention, on entend par partie ou face avant, les parties des éléments de la buse laser situées du côté de la tôle à couper lorsque la buse est en fonctionnement. Les parties ou faces opposées étant désignées par le terme « arrière ».

Le premier passage axial 5 débouche au niveau des deux parties avant 1a et arrière 1b du corps 1 de buse. La partie arrière 1b porte donc un deuxième orifice d'entrée 11', alors que la partie avant 1a porte un deuxième orifice de sortie 11 du corps de buse 1, les deuxièmes orifices d'entrée 11' et de sortie 11 étant coaxiaux d'axe AA.

Ce premier passage axial 5 est en fait un évidement, qui peut être de différentes formes, par exemple de forme générale cylindrique, tronconique, avec ou sans canal cylindrique de sortie, convergent-divergent, c'est-à-dire à géométrie dite « De Laval », ou tout autre géométrie.

Le deuxième orifice de sortie 11 est de préférence de section circulaire, d'un diamètre compris de préférence compris entre 0.5 et 5 mm.

La coiffe externe 13 comprend un logement axial 7 dans lequel est agencé au moins partiellement le corps 1 de buse, de préférence coaxialement audit corps 1. Comme on le voit sur la Figure 3A, le logement axial 7 est traversant et comprend notamment un premier orifice de sortie 14 situé au niveau de la face avant 13a de la coiffe externe 13.

Avantageusement, la coiffe externe 13 comprend un fond 15 comprenant un épaulement 9 interne se projetant radialement vers le centre du logement 7, ledit épaulement interne 9 étant formé par une restriction 15 de la section du logement axial 7 au niveau du premier orifice de sortie 14.

Selon l'invention, la buse comprend par ailleurs un élément mobile 3 venant s'insérer dans le logement axial 7 de la coiffe externe 13, entre la coiffe externe 13 et le corps 1 de buse. Cet élément mobile 3 est apte à et conçu pour se déplacer en translation selon l'axe AA à l'intérieur du premier logement 7 de la coiffe externe 13, jusqu'à ce que la partie avant 3a formant jupe de l'élément mobile 3 fasse saillie à l'extérieur dudit logement 7, comme représenté en Figure 2, au travers du premier orifice de sortie 14.

Comme on le voit sur la Figure 3B, l'élément mobile 3 est avantageusement une pièce de révolution comprenant une partie avant 3a formant une jupe de forme générale cylindrique, c'est-à-dire tubulaire. L'élément mobile 3 comprend en outre un deuxième passage axial 4 avec un deuxième orifice de sortie 12 débouchant au niveau de la partie avant 3a formant jupe.

Plus précisément, lorsque la partie avant 3a de l'élément mobile 3 fait saillie à l'extérieur du logement axial 7, le troisième orifice de sortie 12 de l'élément mobile 3, de préférence de section circulaire, débouche en aval du deuxième orifice de sortie 11 du corps 1 de buse.

La paroi périphérique externe de l'élément mobile 3 comprend avantageusement une butée 10, agencée en regard de l'épaulement interne 9 lorsque l'élément mobile 3 est agencé dans le logement axial 7.

De préférence, l'élément mobile 3, le corps 1 de buse et la coiffe externe 13 sont chacun des pièces formées d'un seul bloc et sont agencés coaxialement les uns aux autres. Dit autrement, les axes de symétrie de l'élément mobile 3 et de la coiffe externe 13 sont confondus, ou sensiblement confondus, avec l'axe AA du corps 1 de buse.

Avantageusement, la partie avant 1a du corps 1 de buse est agencée au moins partiellement dans le deuxième passage axial 4 de l'élément mobile 3. L'élément mobile 3 peut se déplacer axialement le long de la paroi périphérique externe de ladite partie avant 1a du corps 1 de buse. Le deuxième passage axial 4 de l'élément mobile 3 et la paroi périphérique externe de la partie avant 1a ont de préférence des profils de forme cylindrique.

Conformément à l'invention, l'élément mobile 3 est donc un élément externe agencé autour d'au moins une partie de la partie avant 1a du corps 1 de buse, c'est-à-dire à l'extérieur du corps 1 de buse et non pas en son sein.

De préférence, l'élément mobile 3 est apte à se déplacer en translation dans le logement axial 7 en direction du premier orifice de sortie 14 sous l'effet d'une pression gazeuse s'appliquant dans le logement axial 7 et s'exerçant sur ledit élément mobile 3. L'élément mobile 3 est avantageusement maintenu au moins partiellement dans le logement 7 grâce à la butée 10 et à l'épaulement 9.

Selon un mode de réalisation particulièrement avantageux de l'invention, illustré sur les Figures 2 à 4, 5A et 5B, le corps 1 de buse comprend au moins un conduit 6 d'amenée de gaz aménagé au sein dudit corps 1 de buse et mettant en communication fluidique le premier passage axial 5 du corps 1 de buse et le logement axial 7 de la coiffe externe 13. De préférence, le corps 1 de buse comprend de un à vingt conduits 6, de préférence de trois à huit conduits 6, traversant ledit corps 1. Ces conduits 6 sont de préférence des évidements, ou perçages, pratiqués dans le corps 1, de préférence encore de section circulaire et d'un diamètre qui peut être de l'ordre de 0,5 à 5 mm.

En fait, la buse de l'invention est destinée à équiper une tête de focalisation montée dans une installation de coupage laser industrielle. Ce type d'installation comprend habituellement au moins une source de gaz d'assistance reliée à au moins une canalisation. Cette canalisation est apte à et conçue pour alimenter en gaz la tête de focalisation, plus précisément le volume interne de ladite tête.

La buse laser est connectée fluidiquement à la tête de focalisation, par l'intermédiaire de l'orifice d'entrée 11' qui met en communication fluidique le volume interne de la tête de focalisation et le premier passage axial 5 du corps 1 de buse. De cette manière, le gaz de coupe 23 qui alimente la tête de focalisation est distribué à travers la buse laser selon l'invention.

Avantageusement, l'élément mobile 3 de la buse est apte à et conçu pour se déplacer en translation dans le logement 7 de la coiffe externe 13 lorsque la source de gaz alimente en gaz la tête de focalisation et le passage axial 5 de la buse laser. Le gaz 23 exerce alors une pression gazeuse sur ledit élément mobile 3 qui induit un déplacement dudit élément 3 dans le logement 7.

En fait, pendant l'utilisation de la buse selon l'invention, le faisceau laser 22 et le gaz d'assistance 23 traversent le premier passage axial 5 du corps 1 de buse et ressortent par le deuxième orifice de sortie 11 débouchant au niveau de la partie avant 1a du corps 1.

Comme on le voit sur la Figure 2, lorsque le gaz 23 alimente le premier passage axial 5 du corps 1 de buse, une partie du gaz distribué dans le premier passage axial 5 alimente également le ou les conduits 6 d'amenée de gaz.

Les conduits 6 jouent le rôle de conduits de dérivation pour distribuer au moins une partie dudit gaz 23 dans le logement axial 7 de la coiffe externe 13, afin qu'une pression gazeuse s'applique dans le logement axial 7 et s'exerce sur l'élément mobile 3.

L'élément mobile 3 se déplace ainsi axialement par rapport au corps 1 de la buse et à la coiffe externe 13 sous l'effet de la pression du gaz d'assistance 23 qui tend à le pousser en direction de la pièce à couper 30. Le déplacement en translation selon l'axe AA de l'élément mobile 3 va provoquer le rapprochement de la jupe 3a de la surface supérieure 30 de la tôle à couper, qui vont venir en contact l'une de l'autre, comme illustré en Figure 6B.

Ainsi, le gaz va être canalisé par la jupe 3a et se trouver concentré au niveau de la tâche laser et donc de la saignée, ce qui va grandement améliorer son efficacité et l'expulsion du métal se fera mieux.

Conformément à l'invention, un élément élastique 8, tel un ressort, est agencé dans le logement axial 7, entre la coiffe externe 13 et le corps de buse 1, de manière à exercer une force de rappel élastique sur l'élément mobile 3 dans un sens tendant à l'éloigner de la pièce 30 à couper. Dit autrement, la force de rappel élastique exercée par l'élément 8 tend à s'opposer au mouvement de translation de l'élément mobile 3 en direction du premier orifice de sortie 14.

Conformément à l'invention, l'élément élastique 8 est agencé dans le logement axial 7. entre la coiffe externe 13 et le corps 1 de buse, de préférence entre l'épaulement 9 et la butée 10.

Ainsi, en fin de coupe, lorsque le gaz est coupé et que la pression gazeuse cesse de s'exercer sur l'élément mobile 3, celui-ci peut être rappelé dans sa position de repos, c'est-à-dire jusqu'à ce que la jupe 3a rentre à l'intérieur du logement 7.

L'élément élastique 8 permet ainsi de limiter le phénomène d'usure de la jupe 3a lors des phases de perçage de la tôle qui précèdent généralement les phases de découpe. En effet, le perçage est le plus souvent opéré avec de faibles pressions de gaz, typiquement moins de 4 bar. L'élément élastique exerce alors une force de rappel suffisante pour que la jupe 3a remonte totalement ou quasi-totalement dans le logement 5 et soit ainsi protégée des projections de métal fondu générées par le perçage.

L'élément élastique 8 facilite aussi les déplacements rapides de la tête de découpe à faible distance au-dessus de la tôle, sans gaz de coupe ni faisceau, puisque la pression gazeuse cesse alors de s'exercer sur l'élément mobile et la jupe 3a rentre à l'intérieur du logement 7. Seule la jupe 3a remonte et il n'est pas nécessaire de relever la tête de focalisation supportant la buse.

En outre, l'élément élastique 8 permet de limiter la pression exercée par l'élément mobile 3 sur la pièce à couper lorsque celui-ci se déplace en direction de la pièce sous l'effet du gaz de coupe. Plus précisément, la force de rappel de l'élément élastique 8 est avantageusement dimensionnée de manière à maintenir l'élément mobile 3 au contact de la pièce à couper tout en limitant la pression que ledit élément exerce sur la tôle.

Ceci permet de minimiser grandement, voire d'éliminer, tout risque de déformation de la tôle dans laquelle la pièce est découpée, de rayures de la surface de la tôle, et d'entraînement de la tôle.

L'élément mobile 3 peut être formé d'un matériau électriquement isolant, de préférence un matériau céramique du type Al₂O₃, AIN, ZrO₂ ou Al₂TiO₅, ou un matériau polymère, par exemple du polyétheréthercétone (Peek) ou Vespel ®, ou de pyrex. Par matériau électriquement isolant, on entend un matériau qui ne conduit pas l'électricité, c'est-à-dire qui interdit le passage de courant électrique entre deux éléments conducteurs électrique.

De manière alternative, l'élément mobile 3 peut être formé d'un matériau conducteur électriquement, par exemple un matériau métallique tel l'acier, le bronze, ou du graphite.

Lorsque l'élément mobile 3 est formé d'un matériau isolant électriquement, la coiffe externe 13 est formée d'un matériau électriquement conducteur, et inversement.

Optionnellement, la partie avant 3a de l'insert 3 peut comprendre une portion d'extrémité aval 17 dont le diamètre externe diminue progressivement en direction du troisième orifice de sortie 12. De la sorte, la partie avant 3a est conformée pour faciliter son passage sur des reliefs ou obstacles présents à la surface de la tôle.

Par portion d'extrémité aval, on entend une portion de la partie avant 3a située à l'extrémité aval de ladite partie avant, c'est-à-dire en regard de la surface supérieure de la tôle à couper.

La portion d'extrémité aval est ainsi conformée pour passer sur un dénivelé ou un obstacle sans ou avec un choc grandement réduit au niveau de la jupe 3a, et sans ou alors très peu de diminution de la vitesse de déplacement de la buse. On évite aussi la présence d'une arête vive à l'extrémité de la partie avant 3a, ce qui procure une plus grande souplesse de mouvement à la jupe de l'invention et lui permet de suivre les variations de niveaux qui peuvent se présenter sur la surface de la tôle à couper, ce qui améliore encore sa mise en oeuvre au plan industriel.

Dans le cadre de l'invention, la portion d'extrémité aval 17 peut comprendre au moins un chanfrein formant un angle α compris entre 0,1 et 80°, de préférence entre 10 et 45°, par rapport à la face avant de la partie avant 1a du corps de buse 1.

De manière alternative, le profil externe de la portion d'extrémité aval 17 peut comprendre au moins une portion de forme curviligne, de préférence au moins une portion de forme convexe. Le rayon de courbure de la au moins une portion de forme convexe est typiquement compris entre 0,1 et 2 mm.

Optionnellement, la buse selon l'invention peut comprendre un élément tubulaire 2 formant manchon autour de tout ou partie de la partie avant 1a du corps 1 de buse, l'élément tubulaire 2 étant formé d'un matériau électriquement isolant tel du polyétheréthercétone (Peek), du Vespel ® ou une céramique électriquement isolante.

Ce mode de réalisation est particulièrement avantageux lorsque l'élément mobile 3 est formé d'un matériau conducteur électriquement, l'élément tubulaire 2 permettant d'éviter tout contact électrique entre l'élément mobile 3 et le corps 1 de buse. On évite ainsi une défaillance des systèmes de capteur de distance capacitif qui équipent les machines industrielles de découpe laser pour assurer un déplacement de la tête de focalisation à une distance constante au-dessus de la tôle à découper.

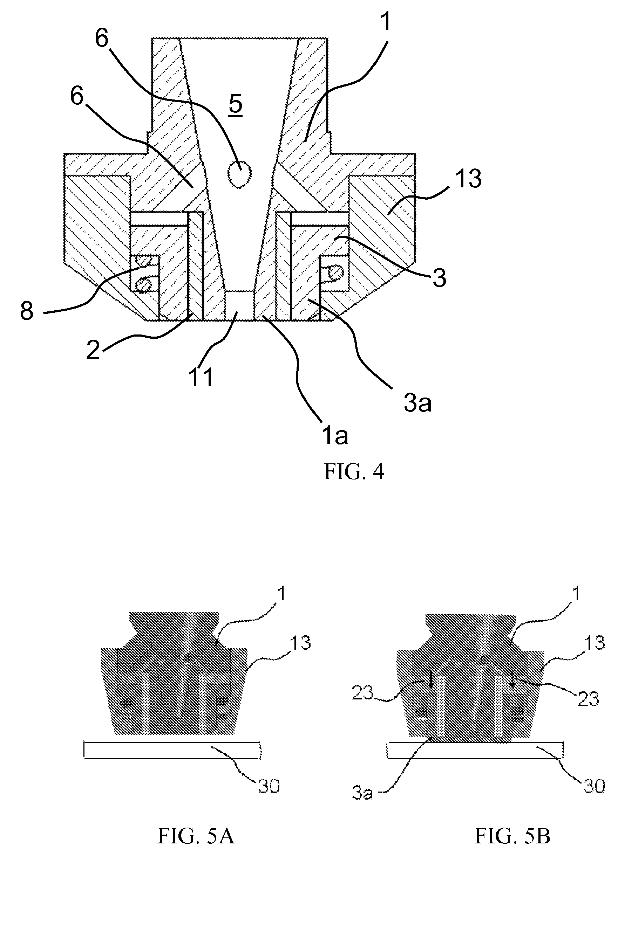

La Figure 4 illustre un autre mode de réalisation de l'invention dans lequel la géométrie du corps 1 de buse et de la coiffe externe 13 varie sensiblement par rapport au mode de réalisation de la Figure 2 mais dont le principe de fonctionnement est identique.

Les Figures 5A et 5B schématisent un déplacement en translation de l'élément mobile 3 sous l'effet d'une pression de gaz 23.

En particulier, la Figure 5A schématise une buse selon l'invention comprenant un élément mobile 3 dont la partie avant 3a est rentrée dans le logement axial 7. La Figure 5B schématise l'effet d'une pression gazeuse 23 s'appliquant dans le logement 7 et s'exerçant sur l'élément mobile 3, celui-ci se déplaçant jusqu'à ce que la partie avant 3a formant jupe fasse saillie à l'extérieur du premier logement 7.

En fait, l'élément mobile 3 de la buse selon l'invention est apte à se déplacer entre plusieurs positions comprenant au moins:
- une position de repos dans laquelle la jupe 3a est totalement ou quasi-totalement rentrée dans le logement axial 7 de la coiffe externe 13, comme illustré en Figure 5A, et
- une position de travail dans laquelle la jupe 3a fait totalement ou quasi-totalement saillie à l'extérieur du logement axial 7 de la coiffe externe 13, au travers du premier orifice de sortie 14, et vient au contact de la pièce 30 à couper, comme illustré en Figure 5B.

Bien entendu, l'élément mobile 2 peut occuper des positions intermédiaires dans lesquelles la jupe 3a ne fait que partiellement saillie à l'extérieur du logement axial 7. Ces positions intermédiaires peuvent être notamment fonction de la pression régnant dans le logement axial 7 et qui d'exerce sur l'élément mobile 3.

La présente invention propose donc une buse laser apte à et conçue pour couper avec un faisceau laser en mettant en oeuvre un débit de gaz et/ou une pression de gaz réduits grâce à une architecture de buse particulière permettant de forcer une proportion plus importante de gaz à rentrer dans la saignée et à y expulser efficacement le métal fondu, et ce, quelle que soit la puissance laser et la longueur d'onde du faisceau.

Comme on le voit sur les Figures 2 à 4, la buse de l'invention est d'encombrement standard, c'est-à-dire que son encombrement n'est pas augmenté par rapport à une buse de coupe classique, ce qui est avantageux et compatible avec les découpes par imbrication, c'est-à-dire de pièces au sein d'une même tôle avec très peu d'écart entre les différentes pièces.

De plus, la buse de l'invention présente l'avantage majeur d'être compatible avec la majeure partie des buses laser existant dans l'industrie, même celles dont le corps est de petites dimensions, puisqu'il n'est plus nécessaire d'aménager un logement axial pour accueillir l'élément mobile au sein même du corps de buse. La solution de la présente invention propose ainsi une buse laser à élément mobile externe au corps de buse dont la mise en oeuvre industrielle est améliorée.

### Exemples

Afin de montrer l'efficacité de la buse selon l'invention par rapport à une buse standard, c'est-à-dire une buse classique sans élément mobile, et donc l'intérêt de forcer le gaz dans la saignée de coupe grâce à la mise en oeuvre d'une jupe montée sur un élément mobile, on réalisé des essais comparatifs en utilisant une installation de coupage avec générateur laser de type CO₂ pour généré un faisceau laser qui est amené à une tête de focalisation laser comprenant des optiques de focalisation, à savoir des lentilles.

La tête de focalisation laser est équipée, selon le cas, d'une buse standard avec orifice de sortie de 1,8 mm de diamètre ou d'une buse selon la Figure 2 avec jupe mobile et passage axial du corps de buse avec orifice de sortie de 1,8 mm de diamètre.

Le gaz d'assistance utilisé est de l'azote.

La tôle à couper est en acier inoxydable 304 L de 5 mm d'épaisseur.

Le faisceau laser à une puissance de 4 kW et la vitesse de coupe est de 2,6 m/min

Les résultats obtenus ont montré que :
- avec la buse standard, une pression du gaz de 14 bar est insuffisante pour obtenir une coupe de qualité. En effet, à 14 bar, les bords de coupe comportent de nombreuses bavures adhérentes. Ceci démontre que l'évacuation du métal en fusion se fait mal du fait d'une action insuffisante du gaz sur le métal en fusion devant être expulsé. Afin d'éliminer ces bavures, une pression de 16 bar a été nécessaire.
- avec la buse de l'invention, des essais faits à des pressions s'échelonnant entre 1 et 5 bar ont conduit à des coupes de bonne qualité, c'est-à-dire à des bords de coupe dépourvus de bavures adhérentes. La jupe de la buse permet de canaliser le gaz dans la saignée et d'expulser efficacement le métal fondu. En outre, la buse autorise le fonctionnement du capteur capacitif et la distance entre la partie avant du corps de buse et la surface supérieure de la tôle peut être maintenue constante au cours du procédé de coupe.

Ces essais démontrent clairement l'efficacité d'une buse selon l'invention qui permet de réduire considérablement les pressions de gaz à mettre en oeuvre par rapport à une buse standard, toutes conditions étant égales par ailleurs, et donc de réduire également les consommations gazeuses.

## Revendications

1. Buse laser comprenant :
- un corps (1) de buse comprenant un premier passage axial (5) et un orifice d'entrée (11') permettant d'alimenter ledit premier passage axial (5) en gaz d'assistance (23),
- une coiffe externe (13) comprenant un logement axial (7) et un premier orifice de sortie (14) situé au niveau d'une face avant (13a) de ladite coiffe externe (13), le corps (1) de buse étant agencé au moins partiellement dans ledit logement axial (7),
- un élément mobile (3) comprenant un deuxième passage axial (4) et une partie avant (3a) formant jupe, ledit élément mobile (3) étant agencé entre la coiffe externe (13) et le corps (1) de buse et étant mobile en translation dans le logement axial (7) de la coiffe externe (13), et
- un élément élastique (8) agencé dans le logement axial (7), entre la coiffe externe (13) et le corps (1) de buse,
**caractérisée en ce que** l'élément mobile (3) est apte à et conçu pour se déplacer en translation dans le logement axial (7) en direction du premier orifice de sortie (14) sous l'effet d'une pression gazeuse dudit gaz d'assistance (23) s'appliquant dans ledit logement axial (7) et s'exerçant sur ledit élément mobile (3), ledit élément élastique (8) exerçant une force de rappel élastique sur l'élément mobile (3) tendant à s'opposer au mouvement de translation de l'élément mobile (3) dans le logement axial (7) en direction du premier orifice de sortie (14).

2. Buse selon la revendication 1, **caractérisée en ce que** l'élément mobile (3) est apte à et conçu pour se déplacer en translation dans le logement axial (7), en direction du premier orifice de sortie (14), jusqu'à ce que la partie avant (3a) formant jupe de l'élément mobile (3) fasse saillie à l'extérieur du logement axial (7) au travers dudit premier orifice de sortie (14) du logement axial (7).

3. Buse selon l'une des revendications précédentes, **caractérisée en ce que** le corps (1) de buse, la coiffe externe (13) et l'élément mobile (3) sont des pièces de révolution agencées coaxialement les unes aux autres, le corps (1) de buse comprenant une partie avant (1a) agencée au moins partiellement dans le deuxième passage axial (4) de l'élément mobile (3).

4. Buse selon l'une des revendications précédentes, **caractérisée en ce que** le premier passage axial (5) du corps (1) de buse comprend un deuxième orifice de sortie (11) situé au niveau de la partie avant (1a) dudit corps (1) de buse et le deuxième passage axial (4) de l'élément mobile (3) comprend un troisième orifice de sortie (12) situé au niveau de la partie avant (3a) formant jupe de l'élément mobile (3), ledit troisième orifice de sortie (12) débouchant en aval dudit deuxième orifice de sortie (11) lorsque la partie avant (3a) fait saillie à l'extérieur du logement axial (7).

5. Buse selon l'une des revendications précédentes, **caractérisée en ce que** le corps (1) de buse comprend au moins un conduit (6) d'amenée de gaz aménagé au sein dudit corps (1) de buse et mettant en communication fluidique le premier passage axial (5) du corps (1) de buse et le logement axial (7) de la coiffe externe (13).

6. Buse selon l'une des revendications précédentes, **caractérisée en ce que** le logement axial (7) comprend un épaulement interne (9), de préférence aménagé au niveau du fond (15) dudit logement axial (7), et la paroi périphérique externe de l'élément mobile (3) comprend une butée (10) agencée en regard dudit épaulement interne (9), l'élément élastique (8) étant agencé entre la butée (10) et l'épaulement interne (9).

7. Buse selon l'une des revendications précédentes, **caractérisée en ce qu'**elle comprend en outre un élément tubulaire (2) formant manchon autour de tout ou partie de la partie avant (1a) du corps (1) de buse, l'élément tubulaire (2) étant formé d'un matériau électriquement isolant.

8. Buse selon l'une des revendications précédentes, **caractérisée en ce que** l'élément mobile (3) est apte à se déplacer entre plusieurs positions comprenant :
- une position de repos dans laquelle la partie avant (3a) de l'élément mobile (3) est totalement ou quasi-totalement rentrée dans le logement axial (7), et
- une position de travail dans laquelle la jupe de la partie avant (3a) de l'élément mobile (3) fait totalement ou quasi-totalement saillie à l'extérieur du logement axial (7), au travers du troisième orifice de sortie (14).

9. Tête de focalisation laser comprenant au moins une optique de focalisation, **caractérisée en ce qu'**elle comporte en outre une buse laser selon l'une des revendications précédentes.

10. Installation laser comprenant un générateur laser, de préférence un laser est de type CO₂, YAG, à fibres ou à disques, une tête de focalisation laser et un dispositif de convoyage de faisceau laser relié audit générateur laser et à ladite tête de focalisation laser, **caractérisée en ce que** la tête de focalisation laser est selon la revendication 9.

11. Installation selon la revendication 10, **caractérisée en ce qu'**elle comprend une source de gaz et au moins une canalisation d'amenée de gaz reliant fluidiquement la tête de focalisation et ladite source de gaz, le premier passage (5) du corps (1) de buse laser étant relié fluidiquement à la tête de focalisation et l'élément mobile (3) se déplaçant en translation dans le logement axial (7) du corps (1) de buse lorsque la source de gaz alimente la tête de focalisation et la buse laser.

12. Procédé de coupage par faisceau laser, dans lequel on met en oeuvre une buse selon l'une des revendications 1 à 8, une tête de focalisation laser selon la revendication 9 ou une installation selon l'une des revendications 10 ou 11.

## Patentansprüche

1. Laserdüse, umfassend:
- einen Düsenkörper (1), welcher einen ersten axialen Durchgang (5) und eine Eintrittsöffnung (11') umfasst, welche es ermöglicht, den ersten axialen Durchgang (5) mit Hilfsgas (23) zu speisen,
- eine Außenkappe (13), welche eine axiale Aufnahme (7) und eine erste Austrittsöffnung (14) umfasst, welche auf Ebene einer Vorderfläche (13a) der Außenkappe (13) liegt, wobei der Düsenkörper (1) mindestens teilweise in der axialen Aufnahme (7) angeordnet ist,
- ein bewegliches Element (3), welches einen zweiten axialen Durchgang (4) und einen vorderen Abschnitt (3a) umfasst, welcher einen Kragen bildet, wobei das bewegliche Element (3) zwischen der Außenkappe (13) und dem Düsenkörper (1) angeordnet ist und in der axialen Aufnahme (7) der Außenkappe (13) translatorisch beweglich ist, und
- ein elastisches Element (8), welches in der axialen Aufnahme (7) zwischen der Außenkappe (13) und dem Düsenkörper (1) angeordnet ist,
**dadurch gekennzeichnet, dass** das bewegliche Element (3) imstande und dazu konzipiert ist, sich unter der Einwirkung eines Gasdrucks des Hilfsgases (23), welcher sich in der axialen Aufnahme (7) anlegt und auf das mobile Element (3) wirkt, translatorisch in der axialen Aufnahme (7) in Richtung der ersten Austrittsöffnung (14) zu bewegen, wobei das elastische Element (8) eine elastische Rückstellkraft auf das bewegliche Element (3) auswirkt, welche danach strebt, sich der translatorischen Bewegung des beweglichen Elements (3) in der axialen Aufnahme (7) in Richtung der ersten Austrittsöffnung (14) entgegenzustellen.

2. Düse nach Anspruch 1, **dadurch gekennzeichnet, dass** das bewegliche Element (3) imstande und dazu konzipiert ist, sich translatorisch in der axialen Aufnahme (7) in Richtung der ersten Austrittsöffnung (14) zu bewegen, bis der vordere Abschnitt (3a), welcher den Kragen des beweglichen Elements (3) bildet, durch die erste Austrittsöffnung (14) der axialen Aufnahme (7) nach außen der axialen Aufnahme (7) vorspringt.

3. Düse nach einem der vorstehenden Ansprüche, **dadurch gekennzeichnet, dass** der Düsenkörper (1), die Außenkappe (13) und das bewegliche Element (3) rotationssymmetrische Teile sind, die koaxial zueinander angeordnet sind, wobei der Düsenkörper (1) einen vorderen Abschnitt (1a) umfasst, welcher mindestens teilweise in dem zweiten axialen Durchgang (4) des beweglichen Elements (3) angeordnet ist.

4. Düse nach einem der vorstehenden Ansprüche, **dadurch gekennzeichnet, dass** der erste axiale Durchgang (5) des Düsenkörpers (1) eine zweite Austrittsöffnung (11) umfasst, welche auf Ebene des vorderen Abschnitts (1a) des Düsenkörpers (1) liegt und der zweite axiale Durchgang (4) des beweglichen Elements (3) eine dritte Austrittsöffnung (12) umfasst, welche auf Ebene des vorderen Abschnitts (3a) liegt, welcher den Kragen des beweglichen Elements (3) bildet, wobei die dritte Austrittsöffnung (12) stromabwärtig der zweiten Austrittsöffnung (11) mündet, wenn der vordere Abschnitt (3a) nach außen der axialen Aufnahme (7) vorspringt.

5. Düse nach einem der vorstehenden Ansprüche, **dadurch gekennzeichnet, dass** der Düsenkörper (1) mindestens eine Gaszuleitung (6) umfasst, welche in dem Düsenkörper (1) ausgebildet ist und den ersten axialen Durchgang (5) des Düsenkörpers (1) und die axiale Aufnahme (7) der Außenkappe (13) in Fluidverbindung bringt.

6. Düse nach einem der vorstehenden Ansprüche, **dadurch gekennzeichnet, dass** die axiale Aufnahme (7) eine innere Schulter (9) umfasst, welche bevorzugt auf Ebene des Bodens (15) der axialen Aufnahme (7) ausgebildet ist, und die äußere Umfangswand des beweglichen Elements (3) einen Anschlag (10) umfasst, welcher der inneren Schulter (9) gegenüber angeordnet ist, wobei das elastische Element (8) zwischen dem Anschlag (10) und der inneren Schulter (9) angeordnet ist.

7. Düse nach einem der vorstehenden Ansprüche, **dadurch gekennzeichnet, dass** sie des Weiteren ein rohrförmiges Element (2) umfasst, welches eine Hülse um den gesamten oder einen Teil des vorderen Abschnitts (1a) des Düsenkörpers (1) herum bildet, wobei das rohrförmige Element (2) aus einem elektrisch isolierenden Material gebildet ist.

8. Düse nach einem der vorstehenden Ansprüche, **dadurch gekennzeichnet, dass** das bewegliche Element (3) imstande ist, sich zwischen mehreren Positionen zu bewegen, welche Folgendes umfassen:
- eine Ruheposition, in welcher der vordere Abschnitt (3a) des beweglichen Elements (3) vollständig oder nahezu vollständig in die axiale Aufnahme (7) zurückgezogen ist, und
- eine Arbeitsposition, in welcher der Kragen des vorderen Abschnitts (3a) des beweglichen Elements (3) vollständig oder nahezu vollständig durch die dritte Austrittsöffnung (14) nach außen der axialen Aufnahme (7) vorspringt.

9. Laserfokussierkopf, welcher mindestens eine Fokussieroptik umfasst, **dadurch gekennzeichnet, dass** er des Weiteren eine Laserdüse nach einem der vorstehenden Ansprüche aufweist.

10. Laseranlage, welche einen Lasergenerator, bevorzugt einen Laser des Typs CO₂-, YAG-, Faser- oder Scheibenlaser, einen Laserfokussierkopf und eine mit dem Lasergenerator und dem Laserfokussierkopf verbundene Laserstrahl-Fördervorrichtung umfasst, **dadurch gekennzeichnet, dass** der Laserfokussierkopf Anspruch 9 entspricht.

11. Anlage nach Anspruch 10, **dadurch gekennzeichnet, dass** sie eine Gasquelle und mindestens einen Gaszuführkanal umfasst, welcher den Fokussierkopf und die Gasquelle fluidisch verbindet, wobei der erste Durchgang (5) des Laserdüsenkörpers (1) fluidisch mit dem Fokussierkopf und dem beweglichen Element (3) verbunden ist, welches sich translatorisch in der axialen Aufnahme (7) des Düsenkörpers (1) bewegt, wenn die Gasquelle den Fokussierkopf und die Laserdüse speist.

12. Laserstrahl-Schneidverfahren, wobei eine Düse nach einem der Ansprüche 1 bis 8, ein Laserfokussierkopf nach Anspruch 9 oder eine Anlage nach einem der Ansprüche 10 oder 11 eingesetzt wird.

## Claims

1. Laser nozzle comprising:
- A nozzle body (1) comprising a first axial passage (5) and an inlet (11') for supplying said first axial passage (5) with assist gas (23),
- An outer cap (13) comprising an axial housing (7) and a first outlet (14) located on a front side (13a) of said outer cap (13), the nozzle body (1) being arranged at least partially within said axial housing (7),
- A moving member (3) comprising a second axial passage (4) and a front portion (3a) forming a skirt, said moving member (3) being arranged between the outer cap (13) and the nozzle (1) and being movable in translation within the axial housing (7) of the outer cap (13), and
- An elastic member (8) arranged within the axial housing (7), between the outer cap (13) and the nozzle body (1), **characterised in that** the movable element (3) is suitable for and designed to move in translation within the axial housing (7) towards the first outlet (14) under the effect of gaseous pressure from said assist gas (23) engaging in said axial housing (7) and acting on said movable member (3), said elastic member (8) exerting an elastic return force on the movable member (3) opposing the translation movement of the movable member (3) within the axial housing (7) towards the first outlet (14).

2. Nozzle according to claim 1, **characterised in that** the movable element (3) is suitable for and designed to move in translation within the axial housing (7) towards the first outlet (14), until the front portion (3a) forming a skirt about the mobile member (3) protrudes outside the axial housing (7) through said first outlet (14) of the axial housing (7).

3. Nozzle according to one of the preceding claims, **characterised in that** the nozzle body (1), the outer cap (13) and the movable member (3) are revolving parts arranged coaxially to each other, the nozzle body (1) comprising a front portion (1a) arranged at least partially in the second axial passage (4) of the movable member (3).

4. Nozzle according to one of the preceding claims, **characterised in that** the first axial passage (5) of the nozzle body (1) comprises a second outlet (11) located on the front portion (1a) of said nozzle body (1) and the second axial passage (4) of the movable member (3) comprises a third outlet (12) located on the front portion (3a) forming a skirt about the moving member (3), said third outlet (12) opening downstream of said second outlet (11) when the front portion (3a) protrudes outside the axial housing (7).

5. Nozzle according to one of the preceding claims, **characterised in that** the nozzle body (1) comprises at least one gas supply duct (6) arranged within said nozzle body (1) and fluidly linking the first axial passage (5) of the nozzle body (1) and the axial housing (7) of the outer cap (13).

6. Nozzle according to one of the preceding claims, **characterised in that** the axial housing (7) comprises an inner ledge (9), preferably arranged at the bottom (15) of said axial housing (7), and the outer peripheral wall of the movable member (3) comprises a stop (10) arranged opposite said inner ledge (9), the elastic member (8) being arranged between the stop (10) and the inner ledge (9).

7. Nozzle according to one of the preceding claims, **characterised in that** it further comprises a tubular member (2) forming a sleeve around all or portion of the front portion (1a) of the nozzle body (1), the tubular member (2) being formed of an electrically insulating material.

8. Nozzle according to one of the preceding claims, **characterised in that** the movable member (3) is suitable to move between several positions comprising:
- A rest position wherein the front portion (3a) of the movable member (3) is completely or almost completely retracted into the axial housing (7), and
- A working position wherein the skirt of the front portion (3a) of the movable member (3) is completely or almost completely protruding outside the axial housing (7), through the third outlet (14).

9. Laser focusing head comprising at least one focusing optic, **characterised in that** it further comprises a laser nozzle according to one of the preceding claims.

10. Laser set-up comprising a laser generator, preferably a laser of CO₂, YAG, fibre or disc type, a laser focusing head and a laser beam conveyor device connected to said laser generator and to said laser focusing head, **characterised in that** the laser focusing head is as described in claim 9.

11. Set-up according to Claim 10, **characterised in that** it comprises a gas source and at least one gas supply line fluidly connecting the focusing head and said gas source, the first passage (5) of the laser nozzle body (1) being fluidly connected to the focusing head and the movable member (3) moving in translation within the axial housing (7) of the nozzle body (1) when the gas source supplies the focusing head and the laser nozzle.

12. Laser beam cutting method, wherein a nozzle is applied according to one of the claims 1 to 8, a laser focusing head according to claim 9 or a set-up according to any one of claims 10 or 11.
